# EUROPEAN PATENT APPLICATION

(11) **EP 4 675 426 A1**
(43) Date of publication of application: **07.01.2026**
(21) Application number: 24185705.1
(22) Date of filing: 01.07.2024
(51) Int. Cl.: G06F 9/38, G06F 9/30

(54) **METHOD, COMPUTER PROGRAM, COMPUTER-READABLE DATA CARRIER AND COMPUTING DEVICE FOR DETERMINISTIC EXECUTION OF AN INSTRUCTION SET AS WELL AS APPARATUS COMPRISING SAME**

(71) Applicant: Airbus S.A.S., 31700 Blagnac (FR)
(72) Inventor: Uhrig, Sascha, Taufkirchen (DE)
(74) Representative: LKGLOBAL Partnerschaftsgesellschaft mbB

(57) **Abstract**

A method, computer program (3), computer-readable data-carrier (4), computing device (2), and apparatus (1), such as a vehicle, in particular an aircraft, for deterministic execution of an instruction set (I) containing instructions (M) to be carried out by a processing unit (11) of the computing device (2), are provided, the method comprising the steps of executing a predefined number of pre-branch instructions (A) up to a conditional branch (C) of the instruction set (I) containing at least one branch condition determining a subsequent instruction which is to be executed after the conditional branch (C); predicting at least one of the pre-branch instructions (A) and/or a target instruction (T) to be executed as the subsequent instruction if the at least one condition is met; and inserting the at least one predicted pre-branch instruction (A) and/or the target instruction (T) into the instruction set (I) after the conditional branch (C).

## Description

### Technical Field

The present disclosure relates to computer systems configured to deterministically execute computer programs providing data processing for controlling fault intolerant and/or safety-critical apparatuses, such as vehicles, e.g., aircraft or alike. In particular, the disclosure relates to a method for deterministic execution of an instruction set containing instructions to be carried out by a processing unit of a computing device, a computer program, a computer-readable data-carrier, a computing device, and an apparatus, such as a vehicle, in particular an aircraft.

### Technical Background

Computer systems or digital processing systems for controlling fault intolerant and/or safety-critical apparatuses are known from the prior art. Such computer systems commonly comprise computing devices, e.g., in the form of microcontrollers, digital signal processors (DSPs), field programmable gate arrays (FPGAs), application-specific integrated circuit (ASICs), and alike. The computing devices commonly comprise processing units configured to execute instructions organised in an instruction set architecture (ISA) specifically tailored to technical requirements of the respective processing units, e.g., computer processor cores, for controlling time critical components, such as avionics systems, or alike. Thus, the computing devices have to be specifically reliable.

EP 3 899 566 A1, for example, relates to a monitoring system for an aircraft having sensors configured to sense objects around the aircraft and provide data indicative of the sensed objects. A sense and avoid system is designed in a plurality of software layers, each layer functioning in an independent manner. An evasion software layer is made up of fixed, non-modifiable code that meets an applicable regulatory standard. The remainder of the software layers may be made up of modifiable or non-modifiable code configured so as not to adversely impact the functioning of an evasion software layer, even when modified. Each of the software layers of the sense and avoid system may use information from the sensors and information about the aircraft to generate a recommendation which is ultimately used to determine a possible route that the aircraft can follow to avoid colliding with the sensed object. The aircraft may then be controlled, in accordance with the recommendation, to avoid collision with the object.

EP 2 482 193 B1 refers to a method that involves using execution rules for processes executed on field-programmable gate array computing circuits and CPU controllers. Relevant parameters of a state of an avionics system are monitored based on the rules. An alarm is generated when a parameter does not conform to the rules. The alarm is checked and validated or invalidated. Architecture of the system is reconfigured in a dynamic and automatic manner in case of validation of the alarm by migrating avionics function/model. The rules are used again in case of invalidation of the alarm.

For operating such computing devices, respective computer programs as known from the prior art usually contain regular changes in the sequential execution path, namely so-called conditional branches, for example, if a certain decision is supposed to be taken based on a respective condition. Due to the nature of processor architectures, the conditional branches cause interruptions of the continuous execution of instructions leading to performance reductions, if not handled adequately. To tackle that problem, "static" and "dynamic branch predictors" have been developed and applied in processors according to the prior art. A similar alternative approach for avoiding any branch prediction is called the "branch delay slot" technique but has been replaced by branch prediction due to some weaknesses and can therefore be regarded as being outdated nowadays.

Static predictors as known from the prior art can be seen as being best suited for avionics systems since they provide predictable timing. From an instruction flow perspective, the so-called "always-not-taken" predictor shows a continuous flow while the opposite "always-taken" predictor induces some small breaks or interruptions in the instruction flow. Unfortunately, from a performance perspective, the "always-taken" predictor leads to a better performance compared to the "always-not-taken" predictor, and even more if said interruptions would not take place.

In view of the above, computing devices for controlling fault intolerant and/or safety relevant apparatuses, as known from the prior art, have to deal with certain trade-offs between computing performance and deterministic execution due to said interruptions. Consequently, when deterministic execution cannot be sacrificed, the computing performance has to be limited.

### Summary

It may thus be seen as an object to provide computing devices which can enable computer systems for controlling fault intolerant and/or safety relevant apparatuses to in an essentially fault free, utmost secure, and highly performant manner. Furthermore, it may be seen as an object to enhance or at least provide a way to operate such computer systems. These objects are solved by the subject-matter of the independent claims.

According to an aspect, a method for deterministic execution of an instruction set containing instructions to be carried out by a processing unit of a computing device is provided, the method comprising the steps of executing a predefined number of pre-branch instructions up to a conditional branch of the instruction set containing at least one branch condition determining a subsequent instruction which is to be executed after the conditional branch; predicting at least one of the pre-branch instructions and/or a target instruction to be executed as the subsequent instruction if the at least one condition is met; and inserting the at least one predicted pre-branch instruction and/or the target instruction into the instruction set after the conditional branch.

According to an aspect, a computer program is provided, comprising instructions which, when the program is executed by a computing device, cause the computing device to carry out a corresponding method.

According to an aspect, a computer-readable data-carrier is provided having stored thereon a corresponding computer program.

According to an aspect, a computing device configured to carry out a corresponding computer program and/or comprising a corresponding computer-readable data-carrier is provided.

According to an aspect, an apparatus, such as a vehicle, in particular an aircraft, is provided, comprising a corresponding computing device.

The instruction set can comprise instructions in the form of machine code instructions to be executed by the processing unit as required by a respective processor architecture of the processing unit. For example, the instruction set can be provided as object code created by an assembler based on a respective a computer program. The pre-branch instructions can be positioned upstream of the conditional branch in a specific order in which the instruction are supposed to be executed. By inserting the pre-branch instruction and/or target instruction after the conditional branch, a respective computing result of the pre-branch instruction can be made available as if the branch was taken based on the respective condition. The at least one inserted pre-branch instruction and/or the target instruction can start immediately as an "always taken" prediction of the subsequent instruction already when the conditional branch is reached.

The proposed solution offers an optimised alternative to an "always-taken" branch predictor as known from the prior art, by a technique that eliminates execution breaks. The solution thereby introduces additional instructions for branches that can be predicted as "always-taken". These instructions can be followed by copies of a certain (implementation dependent) number of the original target instructions. The execution of these additional branch instructions differs from the typical behaviour of a standard branch instruction according to the prior art.

The provided solution has the advantage over the prior art that especially for timing deterministic and safety-critical applications, a branching and prediction technique is provided, offering a combination of improved computing performance while keeping a (simple) deterministic timing. In contrast to that, previously existing branch prediction techniques according to the prior at provide either high performance (dynamic predictors) but their timing behaviour can be very difficult (or even impossible) to analyse/predict, e.g., for carrying out a software timing analysis, or the timing is highly deterministic, but the performance is weak (static "not-taken" predictors).

A performance of computer systems utilising the proposed solution is improved in comparison to the prior art, as it at least lies between that of a computer system making use of the previously known dynamic predictors and one making use of the static "not-taken" predictors. In this respect, it should be noted that in the literature the "performance" of a branch predictor is often seen as its pure hit rate i.e., how many predictions of a whole number of predictions are correct. However, when practicably applying computer systems under field conditions, the overall performance of the processor can be regarded as being more important than such a theoretical performance. In other words, under field conditions, a combination of the predictor's "performance" and the actual execution of the subsequent instructions should be considered.

The solution can be implemented as part of digital semiconductors and processing units for airborne and space applications or any other application with requirements on timing determinism such as autonomous driving, sensor fusion, decision making, etc. The solution is not limited to safety-critical applications but can be beneficial for accelerating any kind time deterministic data processing provided by computing devices and computer and/or control systems. The solution particularly provides computing devices which are suitable for all kinds of fault intolerant and/or safety-critical apparatuses.

Consequently, the underlying object is also achieved by providing any kind of apparatus comprising the claimed computing device. A corresponding apparatus may be provided in particular in form of a vehicle, such as a land vehicle, watercraft, aircraft and/or spacecraft, a medical device, such as a diagnostic tool or technical appliance, and/or any kind of utility provider infrastructure, such as power plants, energy network installations, as well as information infrastructure installations. A computer system for solving the underlying problem may thus comprise a computing device. The computer system thereby helps to accelerate data processing in a fully deterministic way.

A corresponding computer program for configuring and/or operating a computing device comprises instructions which, when the program is executed by a computer, cause the computer to carry out a corresponding method. A computer-readable data carrier has stored thereon the computer program. The computer-readable data carrier may include and/or be comprised of a computer-readable medium and/or a data carrier signal carrying the computer program and/or comprising respective instructions which, when the program is executed by a computer, cause the computer to carry out a method for operating and/or configuring a computing device or at least one processing unit thereof.

The processing unit and/or a processing module comprising the processing unit can comprise and/or be comprised of an FPGA and/or ASIC providing at least one processing units. The number of processing units implemented in a given FPGA depends on the resources of the FPGA. The solution thus provides an architecture which is particularly suitable for a deterministic execution of any kind of data processing algorithms. The invention is portable to any kind of FPGA and/or ASIC, including e.g., space-grade FPGAs, since it does not rely on specialized hardware logic inside the FPGA. Moreover, the provided architecture is understandable and explainable which helps during certification processes.

Further developments can be derived from the dependent claims and from the following description. Features described with reference to the computing device may be implemented as method steps, or vice versa. Therefore, the description provided in the context of the computing device applies in an analogous manner also to respective methods. In particular, the functions of the computing device and of its components may be implemented as steps of methods and the method steps may be implemented as functions of the computing device and/or computer system or vice versa.

According to an embodiment of a method, a the at least one predicted pre-branch instruction and/or target instruction is added to the instruction set and executed subsequent to the conditional branch. For example, the at least one predicted pre-branch instruction and/or target instruction can be carried out right after the conditional branch. Thereby, the predicted pre-branch instruction and/or target instruction can be always carried out. This further helps in improving the time deterministic behaviour of the processing unit without overly compromising performance.

According to an embodiment of a method, wherein the at least one predicted pre-branch instruction and/or target instruction is being copied for insertion. By copying the at least one predicted pre-branch instruction and/or target instruction, errors may be reduced. This further helps in increasing reliability of the processing unit carrying out the instruction set.

According to an embodiment of a method, the at least one inserted pre-branch instruction and/or target instruction is being executed while assessing whether the branch condition is met. The inserted pre-branch instruction and/or target instruction can be always executed as a potential subsequent instruction. This further helps in improving the time deterministic behaviour of the processing unit without overly compromising performance.

According to an embodiment of a method, the at least one inserted pre-branch instruction and/or target instruction, and a branch instruction for assessing the at least one branch condition are being executed in parallel. Thereby, the computing device may carry on with solving the branch condition and processing the at least one inserted pre-branch instruction and/or target instruction simultaneously. This can further help in improving the time deterministic behaviour of the processing unit without overly compromising performance.

According to an embodiment of a method, the at least one inserted pre-branch instruction, and/or target instruction is being executed using a memory pointer used by the respective at least one pre-branch instruction and/or target instruction. Thereby, the inserted instruction can easily, efficiently, and unequivocally access the same memory location as the underlying instruction. This further helps in reliably and efficiently carrying out the instruction set.

According to an embodiment of a method, a memory address of the at least one inserted pre-branch instruction and/or target instruction is being set to the respective memory address of the pre-branch instruction and/or target instruction, respectively. Thereby, the inserted instruction can easily, efficiently, and unequivocally be handled. This again further helps in reliably and efficiently carrying out the instruction set.

According to an embodiment of a method, a predefined number of the pre-branch instructions up to the conditional branch is configured to be executed in a loop as long as the at least one condition is met. The loop can be executed until the conditional branch is not taken. This can further help in improving the time deterministic behaviour of the processing unit without overly compromising performance.

According to an embodiment of a method, the loop returns to a pre-branch instruction to be executed before the conditional branch and following the at least one pre-branch instruction and/or target instruction that is inserted after the conditional branch. The conditional branch can close the loop. The inserted pre-branch instructions and/or target instruction, respectively, can be executed anyway. Hence, they do not have to be included in the part of the loop before conditional branch, but virtually constitute a part of the loop being executed after the conditional branch. This can further help in improving the time deterministic behaviour of the processing unit without overly compromising performance.

According to an embodiment of a method, the post-branch instruction following the at least one inserted pre-branch instruction and/or target instruction is being executed if the at least one condition is not met. For example, such a post branch instruction may be arranged in the instruction set right after the at least one inserted pre-branch instruction and/or target instruction such that the processing unit can continue with processing the post-branch instruction right after solving the conditional branch and/or the at least one inserted pre-branch instruction and/or target instruction. This can further help in improving the time deterministic behaviour of the processing unit without overly compromising performance.

According to an embodiment of a method, the method further comprises the step of discarding a processing result of an execution of the inserted pre-branch instructions and/or target instruction if the at least one condition is not met. The processing results can be discarded if the conditional branch is not taken. Thereby, respective memory space used by and/or for storing the result can be freed. This further helps in in improving the time deterministic behaviour of the processing unit without overly compromising performance.

### Brief Description of the Drawings

The subject matter will hereinafter be described in conjunction with the following drawing figures, wherein like numerals denote like elements, and wherein:
Fig. 1 is a shows a schematic representation of an apparatus in the form of an aircraft comprising a computing device configured to be operated based on a method for deterministic execution of an instruction set.
Fig. 2 is a schematic representation of an instruction set to be executed by the computing device shown in Fig. 1.
Fig. 3 is a schematic representation of an instruction set according to the prior art.
Fig. 4 is a schematic representation of another instruction set according to the prior art.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

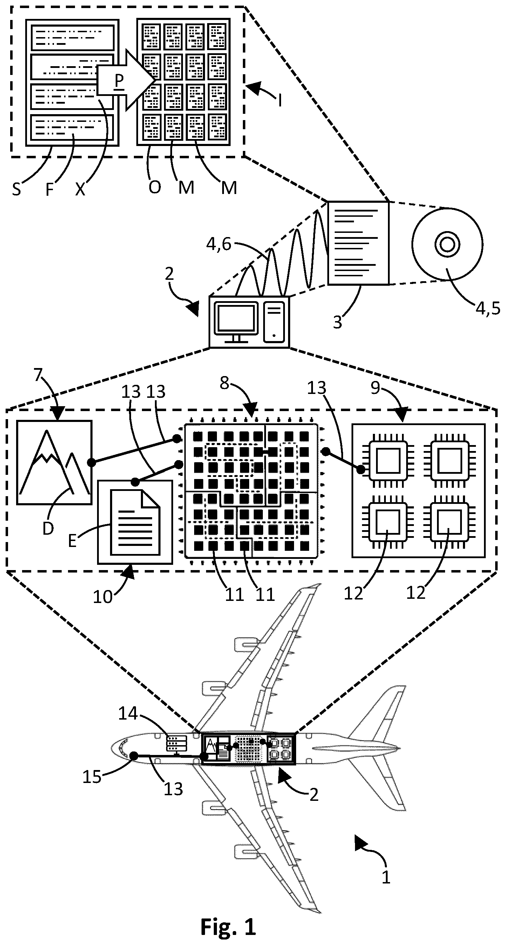

Fig. 1 shows a schematic representation of an apparatus 1 in the form of an aircraft, comprising a computing device 2 configured to be operated based on a method for deterministic execution of an instruction set I. The instruction set I comprises source code S containing computing functions F along with respective computing variables X, and object code O containing machine-readable instructions M which can be provided as machine code derived from the source code S by means of an assembler and/or compiler P. The instruction set I with the source code S, computing functions F, variables X, object code O, instructions M, assembler and/or compiler P can be provided as a computer program 3.

The computer program 3 can be stored on a computer-readable data carrier 4 which may take the form of a computer-readable medium 5 and/or data carrier signal 6. The computing device 2 comprises an input interface unit 7 for feeding input data D to the computing device 2, a processing module 8 a memory module 9 and an output interface unit 10 for output data E generated by the computing device 2. The processing module 8 can carry multiple processing units 11 with logical cells which can be provided with respective memory units (not shown). Local data paths of the processing module 8 provide communication links, connecting the processing units to each other. The memory module 9 comprises multiple memory areas 12. The input interface unit 7, processing module 8, memory module 9, and/or the output interface unit 10 can be connected to each other by means of data connections 13 for exchanging data, such as computing values, between the processing units 11 and the memory areas 12.

The apparatus 1 can be provided with a control device 14 that can be connected to at least one control element 15 and/or the computing device 2 via the data connections 13. The computing device 2 may comprise the control device 14 or vice versa. Hence, the control device 14 may comprise the computing device 1, the computer program 3, the computer-readable data carrier 4, and/or the control element 15 as well as any kind of the data connections 13 for exchanging data between the respective above-mentioned components. The control element 15 may be any kind of data source, such as a measuring element, sensor, output device and/or actuator of the apparatus 1, which may constitute a control system or at least a part thereof for controlling a certain function of the apparatus 1.

The computing device 2 can receive input values A, for example, sensor values, from the control element 15 via the input interface unit 7 and can compute output values B based on the input data A and provide that output data via the output interface unit 10. The apparatus 1 may thus be at least in part be controlled by means of the computing device 2, in particular by the processing module 8, based on the input data D and/or the output data E. In the present example, which is highly simplified for illustration purposes, it is explained how the computing device 2 could process a number of instructions M with one of the processing units 11 of the processing module 8 using a respective number of memory areas 12 needed to store the information on the particular instructions M to be performed, possibly along with respective input data D and/or output data E.

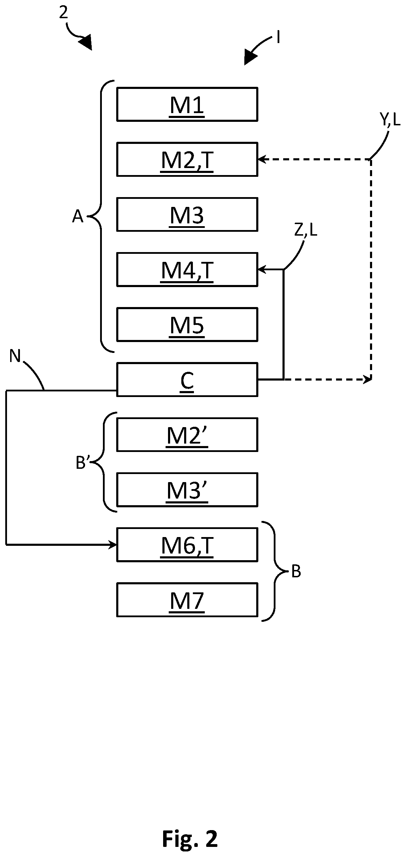

Fig. 2 shows a schematic representation of an exemplary instruction set I to be executed by the computing device 2 shown in Fig. 1. For example, the instruction set I comprises seven instructions M1 to M7 to be executed by the computing device 2, in particular one of the processing units 11 thereof. Furthermore, the instruction set I comprises a conditional branch C determining the target instruction T to be executed based on at least one condition to be solved. The result of solving the conditional branch C can thus be that the branch is taken with a taken decision Y or that the branch is not taken with the respective not taken decision N.

In the present example, first to fifth instructions M1 to M5, respectively, are arranged before the conditional branch C is pre-branch instructions A. The sixth and seventh instruction M6 and M7, respectively, are arranged after the conditional branch C as a subsequent instructions B. In addition, second and third instructions M2 and M3 are copied to positions in the instruction set I such that they follow the conditional branch C as inserted second and third instructions M2' and M3', respectively. The inserted second and third instructions M2' and M3', respectively, constitute predicted subsequent instructions B' which can be executed by the conditional branch C is being solved. In operation, the predicted subsequent instructions B' can be always executed as a static taken prediction.

For example, the branch taken decision Y would lead back to the second instruction M2 as the target instruction T, thus forming a loop L. The loop L can be shortened by providing the inserted second and third instructions M2' and M3', respectively, as predicted subsequent instructions B' and introducing a branch taken prediction Z leading to the fourth instruction M4 as a target instruction T to be executed when the branch is taken, since results of the inserted second and third instructions M2' and M3', respectively, are available replacing results of the original second and third instructions M2 and M3, respectively, for instance, by using the original instruction pointers of the second and third instructions M2 and M3, respectively. In case of the branch not taken decision N, the process will continue with executing the sixth instruction M6 as the target instruction T, allowing to discard the results of executing the inserted second and third instructions M2' and M3', respectively.

The proposed prediction helps to eliminate any execution breaks when executing the instruction set I. The prediction introduces additional instructions, such as the predicted subsequent instructions B', for branches that are predicted as "always-taken". These instructions can be introduced as copies of a certain (implementation dependent) number of the original target instructions, e.g., second and third instructions M2 and M3, respectively. According to the present example, instruction addresses could be defined as follows:
- 3:: first instruction M1
- 4: loop:: second instruction M2
- 5:: third instruction M3
- 6:: fourth instruction M4
- 7:: fifth instruction M5
- 8:: branch_taken_predict loop
- 9:: inserted second instruction M2'
- 10:: inserted third instruction M3'

When the conditional branch C is executed, the following two instructions (inserted second instruction M2' and inserted third instruction M3') are already in the pipeline. Due to the "always-taken" prediction of the branch, the execution of these instructions can immediately start, but their internal address is set to the actual branch target (e.g., the second instruction M2 as the target instruction T). Moreover, according to the present example, further instruction fetching can be set to the address "branch target + 2", i.e., address No. 6 corresponding to the fourth instruction M4. The actual branch condition can be resolved in parallel. If it turns out that the branch actually must not be taken, the inserted instructions can be discarded and the execution resumes on the address "branch+3" i.e. address No. 11 in the present example. If it turns out that the branch actually is taken, the two copies are completely executed and the fetching of new instructions continues at address No. 5 (as set before). There is no interruption of the instruction execution flow.

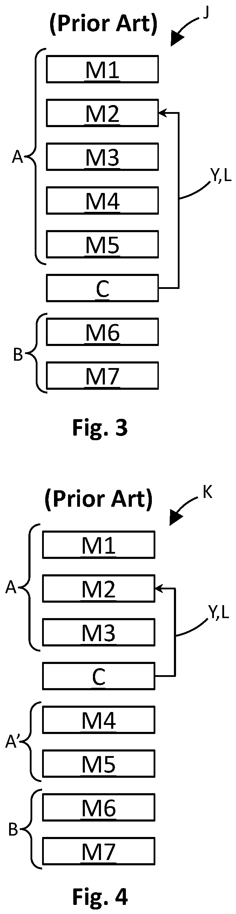

Having copies of the target instructions T following the conditional branch C enables a continuous execution flow since these instructions are fetched anyhow and no complex fetch unit or branch target buffer is necessary. Modifying the internal addresses of these instructions to the addresses of the original instructions allows for all kinds of instructions to be located there. This is of special importance if these instructions can cause an exception (e.g., a memory page miss): the exception handler can easily return back to the respective instruction, which will be the original instruction then and not the copy (which would be very problematic for "branch delay slots" as illustrated in Fig. 4 and one reason for why they disappeared from the processor landscape.)

Fig. 3 shows a schematic representation of a conventional instruction set J according to the prior art, for example, showing a normal program flow. Here, the branch taken decision Y closes the loop L to the second instruction M2. In case of a branch not taken decision N, the process would continue with the sixth instruction M6. Here, a static non-taken prediction would always execute sixth and seventh instructions M6 and M7, respectively, i.e., very often in case of the illustrated loop L, leading to that respective results are discarded upon the branch taken decision Y.

Thus, respective "always-taken" predicting processor pipelines according to the prior art will stop the fetching of new instructions when they see a conditional branch C as soon as possible and redirect the fetch to the target address of the branch. This may improve the overall execution performance but still induces a break in fetching and executing instructions. Such a break can be avoided by an instruction set I as described above with reference to Fig. 2, thus providing a deterministic timing.

Fig. 4 shows a schematic representation of another instruction set K according to the prior art. Here, a branch delay slot is created by moving the fourth and fifth instruction M4 and M5, respectively, to positions after the conditional branch C, thus forming additional pre-branch instructions A' to be processed in addition to the sixth and the seventh instructions M6 and M7, respectively. Here, as already mentioned above, the problem arises, whether these moved fourth and fifth instruction M4 and M5, respectively, are actually suitable, in particular in the event that an exception handler would have to return to a predefined target instruction T.

### List of Reference Signs

- 1: apparatus / vehicle /aircraft
- 2: computing device
- 3: computer program
- 4: computer-readable data carrier
- 5: computer-readable medium
- 6: data carrier signal
- 7: input interface unit
- 8: processing module
- 9: memory module
- 10: output interface unit
- 11: processing units
- 12: memory area
- 13: data connection
- 14: control device
- 15: control element
- A: pre-branch instruction
- A': additional pre-branch instruction
- B: post-branch instruction
- C: conditional branch
- D: input data
- E: output data
- F: output data
- I: instruction set
- J: conventional instruction set
- K: branch delay slot instruction set
- L: loop
- M: machine-readable instruction
- N: branch not taken decision
- O: object code
- P: assembler/ compiler
- S: source code
- X: computing variable
- Y: branch taken decision
- Z: branch taken prediction

## Claims

1. Method for deterministic execution of an instruction set (I) containing instructions (M) to be carried out by a processing unit (11) of a computing device (2), the method comprising the steps of
executing a predefined number of pre-branch instructions (A) up to a conditional branch (C) of the instruction set (I) containing at least one branch condition determining a subsequent instruction which is to be executed after the conditional branch (C);
predicting at least one of the pre-branch instructions (A) and/or a target instruction (T) to be executed as the subsequent instruction if the at least one condition is met; and
inserting the at least one predicted pre-branch instruction (A) and/or the target instruction (T) into the instruction set (I) after the conditional branch (C).

2. Method according to claim 1, wherein the at least one predicted pre-branch instruction (A) and/or target instruction (T) is added to the instruction set (I) and executed subsequent to the conditional branch (C).

3. Method according to claim 1 or 2, wherein the at least one predicted pre-branch instruction (A) and/or target instruction (T) is being copied for insertion.

4. Method according to at least one of claims 1 to 3, wherein the at least one inserted pre-branch instruction (A) and/or target instruction (T) is being executed while assessing whether the branch condition is met.

5. Method according to at least one of claims 1 to 4, wherein the at least one inserted pre-branch instruction (A) and/or target instruction (T), and a branch instruction for assessing the at least one branch condition are being executed in parallel.

6. Method according to at least one of claims 1 to 5, wherein the at least one inserted pre-branch instruction (A), and/or target instruction (T) is being executed using a memory pointer used by the respective at least one pre-branch instruction (A) and/or target instruction (T).

7. Method according to at least one of claims 1 to 6, wherein a memory address of the at least one inserted pre-branch instruction (A) and/or target instruction (T) is being set to the respective memory address of the pre-branch instruction (A) and/or target instruction (T), respectively.

8. Method according to at least one of claims 1 to 7, wherein a predefined number of the pre-branch instructions (A) up to the conditional branch (C) is configured to be executed in a loop (L) as long as the at least one condition is met.

9. Method according to claim 8, wherein from the conditional branch (C), the loop (L) returns to a pre-branch instruction (A) to be executed before the conditional branch (C) and following the at least one pre-branch instruction (A) and/or target instruction (T) that is inserted after the conditional branch (C).

10. Method according to at least one of claims 1 to 9, wherein a post-branch instruction (B) following the at least one inserted pre-branch instruction (A) and/or target instruction (T) is being executed if the at least one condition is not met.

11. Method according to at least one of claims 1 to 10, further comprising the step of discarding a processing result of an execution of the inserted pre-branch instructions (A) and/or target instruction (T) if the at least one condition is not met.

12. A computer program (3) comprising instructions which, when the program is executed by a computing device (2), cause the computing device (2) to carry out a method according to at least one of claims 1 to 11.

13. A computer-readable data-carrier (4) having stored thereon the computer program (3) of claim 12.

14. A computing device (2) configured to carry out a computer program (3) according to claim 12 and/or comprising a computer-readable data-carrier (4) according to claim 13.

15. An apparatus (1), such as a vehicle, in particular an aircraft, comprising a computing device (2) according to claim 14.
